**Europäisches Patentamt**

**European Patent Office**

**Office européen des brevets**

(19)

(11) Veröffentlichungsnummer: **0 264 010**
**B1**

(12)

# EUROPÄISCHE PATENTSCHRIFT

(45) Veröffentlichungstag der Patentschrift:
17.01.90

(51) Int. Cl.⁴: **F16L 37/14**, F16L 33/20

(21) Anmeldenummer: 87114105.7

(22) Anmeldetag: 26.09.87

(54) Schlauchkupplung.

(30) Priorität: 05.08.87 DE 3725897
15.10.86 DE 3635036

(43) Veröffentlichungstag der Anmeldung:
20.04.88 Patentblatt 88/16

(45) Bekanntmachung des Hinweises auf die Patenterteilung:
17.01.90 Patentblatt 90/3

(84) Benannte Vertragsstaaten:
AT DE ES FR GB IT SE

(56) Entgegenhaltungen:
US-A- 4 431 218
US-A- 4 537 427

(73) Patentinhaber: Weinhold, Karl Dipl.-Ing. (FH), Im Jagdfeld 43, D-4040 Neuss(DE)

(72) Erfinder: Weinhold, Karl Dipl.-Ing. (FH), Im Jagdfeld 43, D-4040 Neuss(DE)

(74) Vertreter: Patentanwaltsbüro Cohausz & Florack, Postfach 14 01 20 Schumannstrasse 97, D-4000 Düsseldorf 1(DE)

## Beschreibung

Die Erfindung betrifft eine Schlauchkupplung, insbesondere für Hochdruckschläuche, mit den Merkmalen des Anspruchs 1.

Schlauchkupplungen mit Steckverbindung sind an sich bekannt, z.B. aus DIN 20043 und aus US-A 4 537 427. Diese bekannten Schlauchkupplungen mit Steckverbindung haben den Nachteil, daß ihre Stabilität nicht genügend groß ist, um den herrschenden Drücken in der Leitung ebenso wie den äußeren mechanischen Belastungen standzuhalten. Insbesondere bei pulsierender Stoßbelastung, wie sie in Hochdruckleitungen häufig auftritt, kommt es bei bekannten Schlauchkupplungen mit Steckverbindung häufig zum Bruch. Schwachstellen sind dabei einmal die Kupplungsklammer, zum anderen aber auch die Eingriffstelle der Preßhülse an der Tülle. Unbefriedigend ist auch die Knickfestigkeit bekannter Schlauchkupplungen mit Steckverbindung. Beim Einsatz von Schlauchkupplungen unter Tage kommt es häufig vor, daß Gestein auf die Schlauchkupplung fällt oder jemand versehentlich auf die Schlauchkupplung tritt. Unter solchen Belastungen brechen bekannte Steckkupplungen häufig.

Der Erfindung liegt somit die Aufgabe zugrunde, eine Schlauchkupplung mit Verbindungsmitteln zu schaffen, die ausreichend stabil ist, um sowohl erhöhten äußeren mechanischen Belastungen als auch vom Fördermedium übertragenen pulsierenden Stoßbelastungen sowie hohem Innendruck standhalten zu können.

Zur Lösung dieser Aufgabe wird bei einer Schlauchkupplung erfindungsgemäß vorgeschlagen, daß auch die den Steckteil mindestens teilweise übergreifende Preßhülse mit Elementen von Schraub-, Steck-, Dreh-, oder Klemmitteln zum Verbinden der Kupplungsteile versehen ist.

Bei der erfindungsgemäßen Schlauchkupplung erfolgt die Krafteinleitung von dem Steckteil über die Preßhülse, wodurch günstigere Verhältnisse geschaffen werden als bei bekannten Verbindungen, bei denen die Kraft von dem Muffenteil über das Steckteil auf die Tülle eingeleitet wird, welche den schwächsten Teil in der Kette darstellt mit der als Schwachstelle wirkenden Ringnut in der Tülle, in die die Preßhülse eingreift.

Eine vorteilhafte Ausgestaltung der Erfindung ist dadurch gekennzeichnet, daß die Preßhülse mit einem Ringbund als Steckmittel an dem in den Muffenteil der gegenüberliegenden Kupplungshälfte hineinreichenden Ende versehen ist, dessen Rückseite die Anlagenschulter für eine U-förmige Kupplungskammer bildet, die mit ihren Schenkeln in Bohrungen im Muffenteil eingesteckt ist und diesen mit dem Steckteil verbindet.

Gemäß einer weiteren bevorzugten Ausgestaltung der vorgenannten erfindungsgemäßen Lösung soll der Steckteil einen verjüngten zylindrischen Endabschnitt besitzen, der paßgenau in einen entsprechenden zylindrischen Bohrungsabschnitt im Muffenteil bis zum Anschlag eingesetzt und diesem gegenüber abgedichtet ist und der bei eingesteckter Kupplungsklammer im Abstand zur axialen Endfläche des Bohrungsabschnitts steht.

Bei einer weiteren Ausführungsform ist bei einer gattungsgemäßen Schlauchkupplung mit Steckverbindung erfindungsgemäß vorgesehen, daß die Preßhülse mit einem einstückigen axialen Fortsatz als Muffenteil versehen ist, und daß der Steckteil einen Ringbund aufweist, dessen Rückseite die Anlageschulter für eine Kupplungsklammer bildet.

Vorzugsweise soll bei dieser Lösung der Steckteil einen verjüngten zylindrischen Endabschnitt besitzen, der paßgenau in einen entsprechenden zylindrischen Bohrungsabschnitt im axialen Fortsatz der Tülle eingesetzt und diesem gegenüber abgedichtet ist und der bei eingesteckter Kupplungsklammer im Abstand zur axialen Endfläche des Bohrungsabschnitts steht.

Die kraftschlüssige Verbindung zwischen Muffenteil und Preßhülse erfolgt über die Kupplungsklammer. Da die Kupplungsklammer gegenüber bekannten Kupplungs-Ausführungen radial weiter außen angeordnet sein kann, ist der tragende Querschnitt gröber. Daher kann die Kupplungsklammer höhere Kräfte aufnehmen.

Neben dem Kraftschluß ist Formschluß zwischen dem Muffenteil und der Preßhülse bzw. dem Steckteil gegeben, wenn gemäß einer bevorzugten Ausführung der Erfindung der Außendurchmesser des Ringbundes an der Preßhülse bzw. am Steckteil gleich dem Innendurchmesser des Muffenteils ist. Aufgrund des Formschlusses zwischen Muffenteil und Steckteil bzw. Preßhülse in Verbindung mit dem durch die Kupplungsklammer bewirkten Kraftschluß bilden diese Teile praktisch eine starre, stabile Einheit. Die Knickfestigkeit ist erheblich höher als bei bekannten Ausführungen, aber auch die Belastbarkeit der Kupplung von innen her ist höher.

Eine andere Lösung im Rahmen der vorliegenden Erfindung ist eine Schlauchkupplung, bei der an der Preßhülse ein sich bis zum Endabschnitt des an die Tülle angeformten Steckteils erstreckender Muffenabschnitt angeformt ist. Dieser Muffenabschnitt kann glatt zylindrisch sein wie für eine Steckverbindung mit entsprechendem Sicherungsstift; bevorzugt weist der Muffenabschnitt jedoch Innengewinde auf zum Verschrauben mit einem entsprechenden Schraubverbindungsmittel der anderen Schlauchkupplungshälfte. Alternativ ist der Muffenabschnitt als Preßmuffe ausgebildet und wird durch Pressen mit dem Gegenstück der Schlauchkupplung fest verbunden.

Bevorzugt wird es ferner, wenn der Steckteil zu seinem vorderen Ende hin konisch sich verjüngend ausgebildet ist und in ein entsprechend konisch geformtes Gegenstück eingesetzt wird, wobei die Verbindung zum Beispiel durch eine Überwurfmutter erfolgen kann.

Aufgrund der größeren Stabilität kann die Schlauchkupplung mit Steckverbindung gemäß der Erfindung für höhere Drücke eingesetzt werden. Sie ist auch in der Lage, pulsierende Stoßbelastungen aufzunehmen. Außer der Kupplungsklammer hat die erfindungsgemäße Schlauchkupplung praktisch keine weitere Schwachstelle.

Infolge des Axialabstands zwischen der Endfläche des Steckteils und der Endfläche des Bohrungsabschnitts, in dem es steckt, wirken auf beide Endflächen der Tülle vom Druckmedium ausgehende Kräfte, die sich bei gleichen Flächen in Axialrichtung aufheben. Daher ist die Tülle innerhalb der erfindungsgemäßen Schlauchkupplung kräftefrei gelagert.

Nach einer bevorzugten Ausgestaltung der Erfindung soll die Tülle aus vergütetem Stahl bestehen, damit auch bei dünner Wandstärke der Tülle als Voraussetzung für einen möglichst geringen Strömungswiderstand im Schlauch eine hohe Festigkeit gewährleistet ist.

In der Zeichnung sind zwei Ausführungsbeispiele der erfindungsgemäßen Schlauchkupplung mit Steckverbindung dargestellt.

Es zeigen

Fig. 1 ein Ausführungsbeispiel im Längsschnitt und
Fig. 2 im Querschnitt längs der Linie A-B aus Fig. 1,
Fig. 3 die ursprüngliche Form der Preßhülse,
Fig. 4 im Längsschnitt ein weiteres Ausführungsbeispiel der Schlauchkupplung und
Fig. 5 die Muffe einstückig mit Preßhülse im Ausgangszustand,
Fig. 6 is ein Längsschnitt durch eine Schlauchkupplungshälfte in einer anderen Ausführung,
Fig. 7 ist ein Längsschnitt durch einen entsprechenden Nippel als Zwischenstück zur anderen Schlauchkupplungshälfte, die nicht dargestellt ist.
Fig. 8 zeigt die Verbindung der Teile aus den Figuren 6 und 7,
Fig. 9 ist der Längsschnitt durch ein weiteres Ausführungsbeispiel der einen Schlauchkupplungshälfte,
Fig. 10 der entsprechend ausgebildete Nippel und
Fig. 11 die Verbindung der beiden Teile aus den Fig. 9 und 10,
Fig. 12 ist ein Längsschnitt durch eine weitere Ausführungsform mit dem entsprechenden Nippel in
Fig. 13 und Fig. 14 zeigt wieder die Verbindung der Teile aus den Figuren 12 und 13 im Längsschnitt,
Fig. 15 ist ein weiteres Ausführungsbeispiel einer Schlauchkupplungshälfte und
Fig. 16 der zugehörige Nippel, während wiederum Fig. 17 im Längsschnitt die Verbindung der Teile aus den Figuren 15 und 16 zeigt,
Fig. 18 ist eine weitere mögliche Ausführung einer Schlauchkupplungshälfte mit den Merkmalen der Erfindung im Längsschnitt,
Fig. 19 bis Fig. 22 zeigen alternative Ausführungsbeispiele für Schlauchkupplungen mit modifizierten Nippeln als Zwischenstücke, an denen die gegenüberliegende Schlauchkupplungshälfte angesetzt wird.

Gleiche Teile sind in den verschiedenen Figuren mit denselben Bezugszeichen versehen.

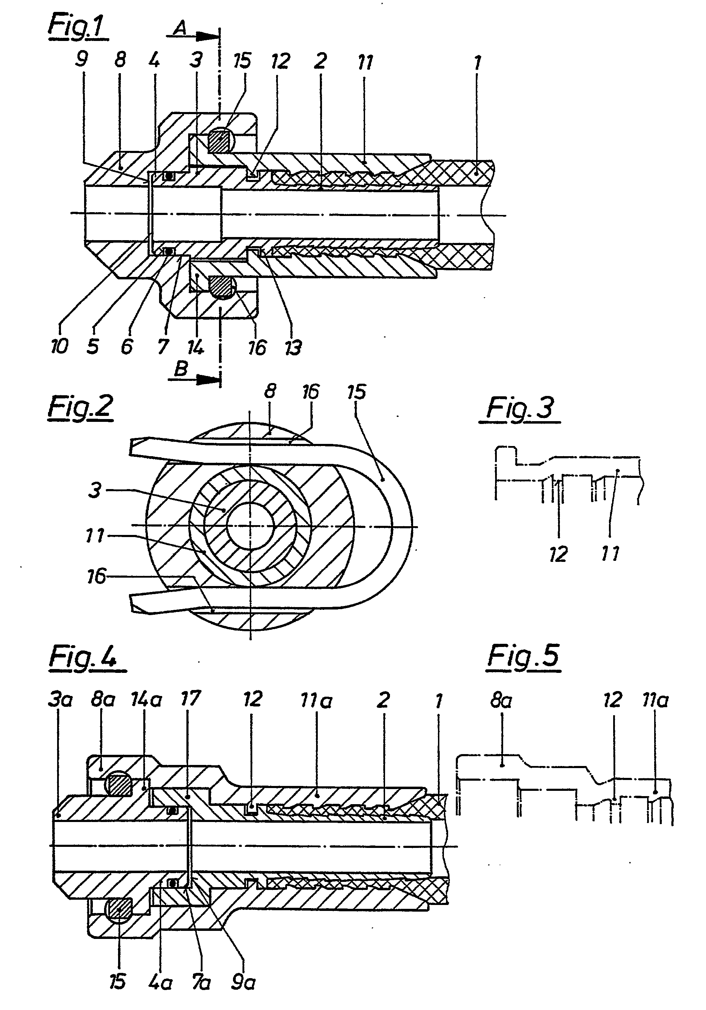

Bei der Ausführung der Schlauchkupplung gemäß Fig. 1 bis 3 ist der Schlauch 1 auf die Tülle 2 geschoben. Die Tülle 2 hat am vorderen Ende als einstückigen axialen Fortsatz den Steckteil 3. Der Steckteil 3 hat einen verjüngten zylindrischen Endabschnitt 4. In dem Umfang des Endabschnitts 4 ist in eine Ringnut 5 eine Ringdichtung 6 eingelegt, die den Spalt zwischen dem Umfang des zylindrischen Endabschnitts 4 und dem mit gleichem Innendurchmesser ausgeführten Bohrungsabschnitt 7 im Muffenteil 8 abdichtet. Wenn der Endabschnitt 4 bis zum Anschlag in den Bohrungsabschnitt 7 eingesteckt ist, verbleibt zwischen ihm und der Endfläche 9 des Bohrungsabschnitts 7 ein Spalt 10. Dieser Spalt 10 bewirkt, daß von dem Druckmedium, welches die Schlauchkupplung durchströmt, Kraft auf beide Endflächen der Tülle 2 bzw. dem mit dieser einstückigen Steckteil 3 ausgeübt wird. Die in entgegengesetzten Richtungen wirkenden Kräfte heben sich dabei auf, so daß die Tülle 2/der Steckteil 3 in axialer Richtung kräftefrei in der Schlauchkupplung gelagert ist.

Die konzentrisch um die Tülle 2 angeordnete Preßhülse 11, die im Ausgangszustand die in Fig. 3 dargestellte Kontur hat, greift beim Umpressen mit dem Ringbund 12 in die Umfangsringnut 13 in der Tülle 2 ein und ist mit dieser dadurch formschlüssig verbunden. Die Preßhülse 11 setzt sich in axialer Richtung weiter bis in den Muffenteil 8 fort und umgreift dabei auch den Steckteil 3 teilweise. Die Preßhülse 11 hat an ihrem Ende einen Ringbund 14, dessen Außendurchmesser gleich dem Innendurchmesser des Muffenteils 8 ist. Mittels einer Kupplungsklammer 15, die mit ihren Schenkeln durch diametrale Bohrungen 16 im Muffenteil 8 hindurchgeschoben ist, wird die mit der Tülle 2 formschlüssig verbundene Preßhülse 11 mit Muffenteil 8 dadurch axial unbeweglich verbunden, daß der Ringbund 12 durch die Schenkel der Kupplungsklammer 15 im Muffenteil 8 festgelegt wird. Dabei bildet die Rückseite des Ringbundes 12 die Anlagefläche für die Kupplungsklammer 15.

In Fig. 4 ist ein weiteres Ausführungsbeispiel dargestellt. Dieses unterscheidet sich von dem gemäß Fig. 1 im wesentlichen dadurch, daß Preßhülse 11a und Muffenteil 8a einstückig miteinander verbunden sind, daß der Steckteil 3a mit einem Ringbund 14a versehen ist, der in den Muffenteil 8a hineinpaßt und mit seiner rückwärtigen Fläche die Anschlagschulter für die Kupplungsklammer 15 bildet, und daß der vordere verjüngte zylindrische Endabschnitt 4a am Steckteil 3a in einen Bohrungsabschnitt 7a im axialen Fortsatz 17 der Tülle 2 abgedichtet eingreift. Auch hier ergibt sich durch die Kupplungsklammer 15 und die paßgenau ineinander gesteckten Abschnitte 4a und 14a des Steckteils 3a und die des Muffenteils 8a eine formschlüssige stabile starre Einheit.

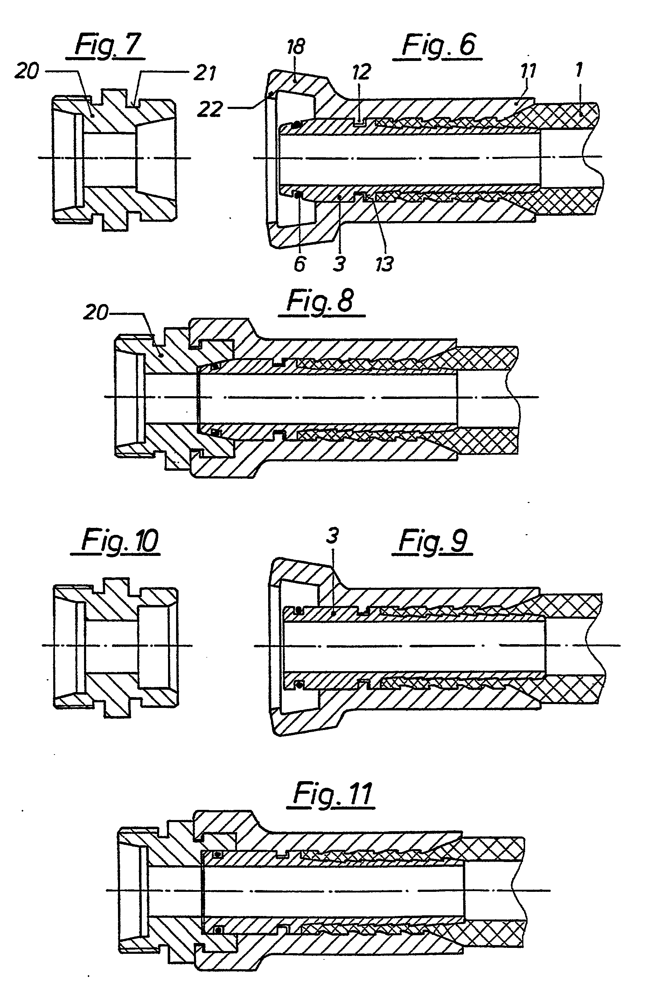

Bei der Ausführung gemäß Fig. 6 ist an die Preßhülse 11 ein Muffenabschnitt 18 einstückig angeformt. Dieser umgibt mit Abstand den konischen Endabschnitt des Steckteils 3 und ist als Preßmuffe ausgebildet, die im gelösten Zustand gemäß Fig. 6 aufgeweitet ist. Nach Einschieben des Gegenstücks, zum Beispiel ein Nippel 20 gemäß Fig. 7 mit entsprechend geformter Aufnahme für das konische Ende des Steckteils 3 und eine Ringnut 21 für den Eingriff des Ringansatzes 22 am Muffenabschnitt 18, wird dieser radial nach innen gepreßt und umklammert dann den Nippel 20, wie die Fig. 8 zeigt.

Eine gleichartige Ausführung, jedoch mit glatt zylindrischem Endabschnitt des Steckteils 3 zeigen die Figuren 9 und 10 in gelöster Stellung der Teile und Fig. 11 im Verbundzustand.

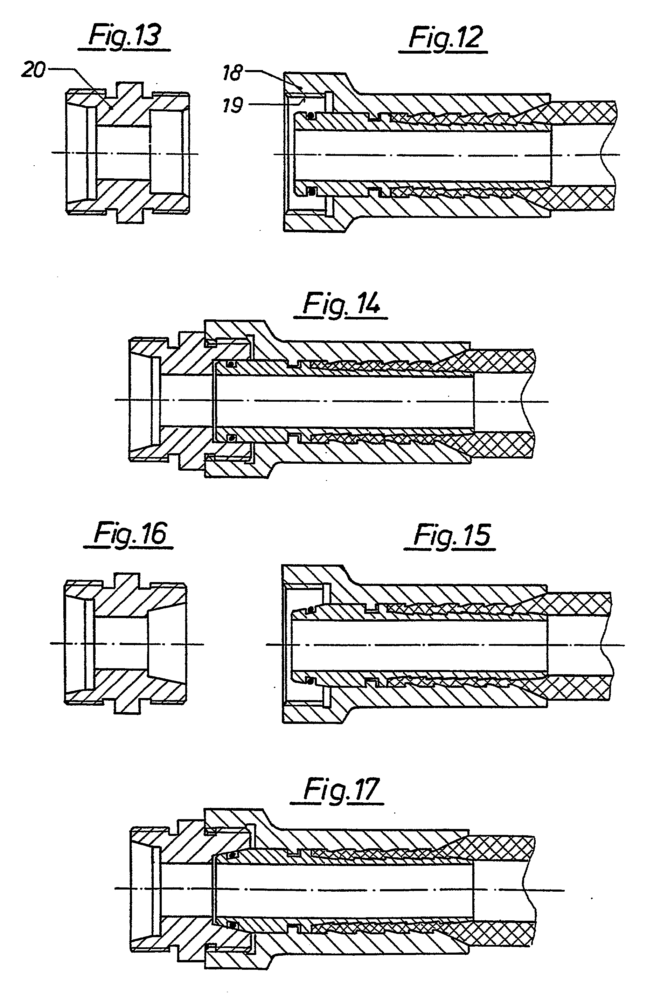

Die Ausführung gemäß Fig. 12 unterscheidet sich von den in den Figuren 6 und 9 dargestellten Alternativen durch ein Innengewinde 19 im Muffenabschnitt 18, in den ein entsprechend geformtes Endstück des Nippels 20 eingeschraubt wird , wie die Verbindungsstellung in Fig. 14 verdeutlicht.

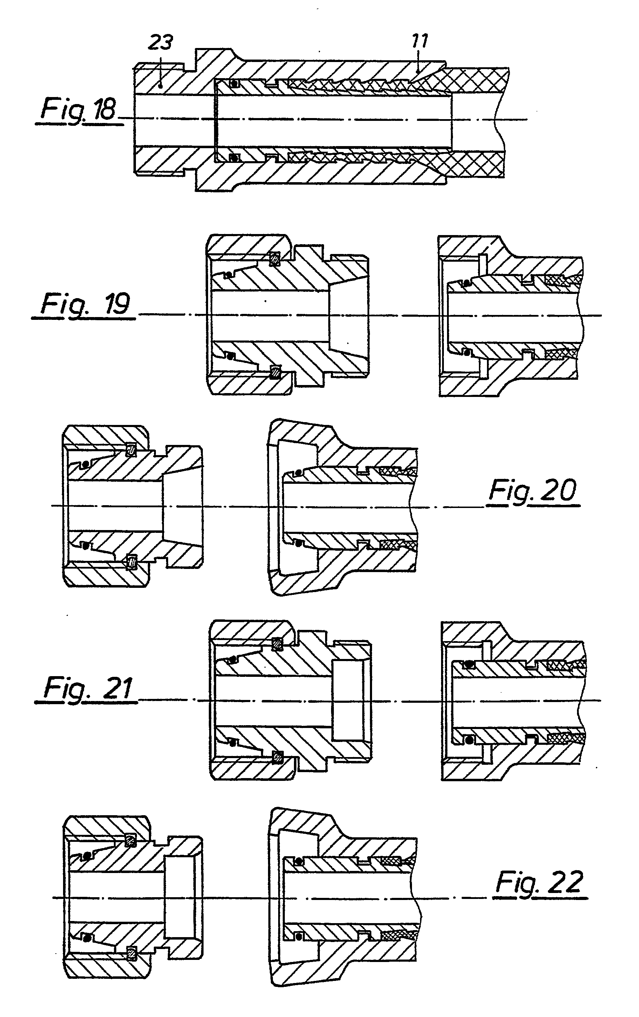

Die Ausführung gemäß Fig. 15 unterscheidet sich von der Fig. 12 nur darin, daß der Steckteil nicht glatt zylindrisch sondern sich konisch verjüngend endet, wie dies auch in entsprechender Weise die Fig. 6 zeigt. Fig. 16 zeigt wiederum den passenden Nippel mit konischer Aufnahme für das Ende des Steckteils 3, und Fig. 17 zeigt die Verbindungsstellung der beiden Teile.

Bei der Ausführung gemäß Fig. 18 setzt sich die Preßhülse 11 in axialer Richtung in einem Gewindeabschnitt 23 fort, der in eine entsprechende Aufnahme im Gegenstück einschraubbar ist.

Die Figuren 19 bis 22 zeigen Verbindungen von Schlauchkupplungshälften in der Ausführung gemäß Fig. 6, 9, 12 und 15 mit einem passenden Nippel, der eine Überwurfmutter trägt, durch welche eine Verbindung mit der gegenüberliegenden, nicht dargestellten, Schlauchkupplungshälfte hergestellt wird.

1 Schlauch
2 Tülle
3 Steckteil
4 Endabschnitt
5 Ringnut
6 Ringdichtung
7 Bohrungsabschnitt
8 Muffenteil
9 Endfläche
10 Spalt
11 Preßhülse
12 Ringbund
13 Umfangsringnut
14 Ringbund
15 Kupplungsklammer
16 Bohrungen
17 axialer Fortsatz
18 Muffenabschnitt
19 Innengewinde
20 Nippel
21 Ringnut
22 Ringansatz
23 Gewindeabschnitt

## Patentansprüche

1. Schlauchkupplung insbesondere für Hochdruckschläuche, mit einem Muttenteil (8) einer Tülle (2), und einem in deren axialen Fortsatz gebildeten Steckteil (3), einer Umfangsdichtung (6) am Steckteil, einer um die Tülle konzentrisch angeordneten, in eine Umfangsnut (13) im Steckteil eingreifenden Preßhülse (11), und mit Schraub-, Steck-, Dreh- oder Klemmitteln zum Verbinden der Kupplungsteile (8, 3), wobei auch die den Steckteil (3) mindestens teilweise übergreifende Preßhülse (11) mit Elementen dieser Verbindungsmittel versehen ist.

2. Schlauchkupplung nach Anspruch 1, dadurch gekennzeichnet, daß die Preßhülse (11) mit einem Ringbund (14) als Steckmittelelement an dem in den Muffenteil (8) der gegenüberliegenden Kupplungshälfte hinreichenden Ende versehen ist, dessen Rückseite die Anlageschulter für eine U-förmige Kupplungsklammer (15) bildet, die mit ihren Schenkeln in Bohrungen im Muffenteil eingesteckt ist und diesen mit dem Steckteil verbindet.

3. Schlauchkupplung nach Anspruch 2, dadurch gekennzeichnet, daß der Steckteil (3) einen verjüngten zylindrischen Endabschnitt (4) besitzt, der paßgenau in einen entsprechenden zylindrischen Bohrungsabschnitt (7) im Muffenteil (8) bis zum Anschlag eingesetzt und diesem gegenüber abgedichtet ist und der bei eingesteckter Kupplungsklammer (15) im Abstand zur axialen. Endfläche (9) des Bohrungsabschnitts (7) steht.

4. Schlauchkupplung nach Anspruch 2 oder 3, dadurch gekennzeichnet, daß der Außendurchmesser des Ringbundes (14) an der Preßhülse (11) gleich dem Innendurchmesser des Muffenteils (8) ist, in den er eingesetzt ist.

5. Schlauchkupplung mit Steckverbindung nach Anspruch 1, dadurch gekennzeichnet, daß die Preßhülse (11a) mit einem einstückigen axialen Fortsatz als Muffenteil (8a) versehen ist und daß der Steckteil (3a) einen Ringbund (14a) aufweist, dessen Rückseite die Anschlagschulter für eine Kupplungsklammer (15) bildet.

6. Schlauchkupplung nach Anspruch 5, dadurch gekennzeichnet, daß der Steckteil (3a) einen verjüngten zylindrischen Endabschnitt (4a) besitzt, der paßgenau in einen entsprechend zylindrischen Bohrungsabschnitt (7a) im axialen Fortsatz (17) der Tülle (2) eingesetzt und diesem gegenüber abgedichtet ist und der bei eingesteckter Kupplungsklammer (15) im Abstand zur axialen Endfläche (9a) des Bohrungsabschnitts (7a) steht.

7. Schlauchkupplung nach Anspruch 5 oder 6, dadurch gekennzeichnet, daß der Außendurchmesser des Ringbundes (14a) am Steckteil (3a) gleich dem Innendurchmesser des Muffenteils (8a) ist, in den er eingesteckt ist.

8. Schlauchkupplung nach Anspruch 1, dadurch gekennzeichnet, daß an der Preßhülse (11) ein sich bis zum Endabschnitt des an die Tülle (2) angeformten Steckteils (3) erstreckender Muffenabschnitt (18) angeformt ist.

9. Schlauchkupplung nach Anspruch 8, dadurch gekennzeichnet, daß der Muffenabschnitt (18) mit Innengewinde (19) versehen ist.

10. Schlauchkupplung nach Anspruch 8, dadurch gekennzeichnet, daß der Muffenabschnitt (18) als Preßmuffe ausgebildet ist.

11. Schlauchkupplung nach einem der Ansprüche 1 bis 10, dadurch gekennzeichnet, daß der Steckteil (3) zu seinem vorderen Ende hin konisch sich verjüngend ausgebildet ist.

12. Schlauchkupplung nach einem der Ansprüche 1 bis 11, dadurch gekennzeichnet, daß die Tülle (2) aus vergütetem Stahl besteht.

**Revendications**

1. Raccord de tuyaux, en particulier pour tuyaux haute pression, avec un manchon (8), une douille (2), et un embout (3) formé dans son prolongement, un joint d'étanchéité périphérique (6) sur l'embout, une douille de pression (11) disposée concentrique autour de la douille et en prise dans une rainure périphérique (13) dans l'embout, et avec des moyens à vis, à fiche, à rotation ou à serrage pour relier les parties de raccord (8, 3), la douille de pression (11) recouvrant au moins partiellement l'embout (3) étant également munie d'éléments de ces moyens de liaison.

2. Raccord de tuyaux selon la revendication 1, caractérisé en ce que la douille de pression (11) est munie d'une collerette annulaire (14), en tant qu'élément d'un moyen d'enfichage, à l'extrémité arrivant dans le manchon (8) de la moitié de raccord opposée, dont la face arrière forme l'épaulement d'appui pour une bride d'accouplement (15) en forme de U, qui est enfoncée par ses branches dans des alésages dans le manchon et relie celui-ci à l'embout (3).

3. Raccord de tuyaux selon la revendication 2, caractérisé en ce que l'embout (3) possède une section terminale (4) cylindrique effilée qui est introduite à ajustage exact dans une section d'alésage (7) cylindrique correspondante dans le manchon (8) jusqu'à butée et est rendue étanche vis-à-vis de celui-ci, et qui, pour la bride d'accouplement (15) enfoncée, est écartée de la surface terminale (9) axiale de la section d'alésage (7).

4. Raccord de tuyaux selon la revendication 2 ou 3, caractérisé en ce que le diamètre extérieur de la collerette annulaire (14) sur la douille de pression (11) est égal au diamètre intérieur du manchon (8) dans lequel elle est logée.

5. Raccord de tuyaux avec liaison à enfichage selon la revendication 1, caractérisé en ce que la douille de pression (11) est munie d'un prolongement axial d'une seule pièce formant manchon (8a) et que l'embout (3a) présente une collerette annulaire (14a) dont la face arrière forme l'épaulement d'appui pour une bride d'accouplement (15).

6. Raccord de tuyaux selon la revendication 5, caractérisé en ce que l'embout (3a) possède une section terminale (4a) cylindrique effilée qui est introduite à ajustage exact dans une section d'alésage (7a) cylindrique correspondante dans le prolongement axial (17) de la douille (2) et est rendue étanche vis-à-vis de celui-ci, et qui, pour la bride d'accouplement (15) enfoncée, est écartée de la surface terminale (9a) axiale de la section d'alésage (7a).

7. Raccord de tuyaux selon la revendication 5 ou 6, caractérisé en ce que le diamètre extérieur de la collerette annulaire (14a) sur l'embout (3a) est égal au diamètre intérieur du manchon (8a) dans lequel elle est enfoncée.

8. Raccord de tuyaux selon la revendication 1, caractérisé en ce qu'une section de manchon (18), s'étendant jusqu'à la section terminale de l'embout (3) formé sur la douille (2), est formée sur la douille de pression (11).

9. Raccord de tuyaux selon la revendication 8, caractérisé en ce que la section de manchon (18) est munie d'un taraudage intérieur (19).

10. Raccord de tuyaux selon la revendication 8, caractérisé en ce que la section de manchon (18) est constituée sous forme de manchon de pression.

11. Raccord de tuyaux selon l'une des revendications 1 à 10, caractérisé en ce que l'embout (3) est formé s'effilant en direction de son extrémité avant.

12. Raccord de tuyaux selon l'une des revendications 1 à 11, caractérisé en ce que la douille (2) est formée en acier trempé.

**Claims**

1. Hose coupling, in particular for high-pressure hoses, having a socket part (8), a mouthpiece (2), and an insert (3) formed in the axial extension thereto, a peripheral seal (6) on the insert, a press-on sleeve (11) arranged concentrically around the mouthpiece and engaging in a peripheral groove (13) in the insert, and having screw, insertion, rotary or clamping means for connecting the coupling parts (8, 3), the press-on sleeve (11) at least partly overlapping the insert (3) being provided with elements of these connecting means.

2. Hose coupling according to Claim 1, characterized in that the press-on sleeve (11) is provided with an annular collar (14) as an insertion means element at the end reaching into the socket part (8) of the opposite coupling half, the rear side of this end forming the abutment shoulder for a U-shaped coupling bracket (15) whereof the legs are inserted in bores in the socket part and which connects the latter to the insert.

3. Hose coupling according to Claim 2, characterized in that the insert (3) has a tapered cylindrical end section (4) which is inserted, fitting exactly, in a corresponding cylindrical bore section (7) in the socket part (8) until it abuts and is sealed with respect to the latter and is spaced with respect to the axial end face (9) of the bore section (7) when the coupling bracket (15) is inserted.

4. Hose coupling according to Claim 2 or 3, characterized in that the external diameter of the annular collar (14) on the press-on sleeve (11) is the same as the internal diameter of the socket part (8) into which it is inserted.

5. Hose coupling having an insertion connection according to Claim 1, characterized in that the press-on sleeve (11a) is provided with a one-piece axial extension as socket part (8a), and in that the insert (3a) has an annular collar (14a) whereof the rear side forms the abutment shoulder for a coupling bracket (15).

6. Hose coupling according to claim 5, characterized in that the insert (3a) has a tapered cylindrical end section (4a) which is inserted, fitting exactly, in a correspondingly cylindrical bore section (7a) in the axial extension (17) of the mouthpiece (2) and is sealed with respect to the latter and is spaced with respect to the axial end face (9a) of the bore section (7a) when the coupling bracket (15) is inserted.

7. Hose coupling according to Claim 5 or 6, characterized in that the external diameter of the annular collar (14a) on the insert (3a) is the same as the internal diameter of the socket part (8a) into which it is inserted.

8. Hose coupling according to claim 1, characterized in that a socket section (18) extending as far as the end section of the insert (3) integrally formed on the mouthpiece (2) is integrally formed on the press-on sleeve (11).

9. Hose coupling according to claim 8, characterized in that the socket section (18) is provided with an internal thread (19).

10. Hose coupling according to claim 8, characterized in that the socket section (18) is constructed as a press-on socket.

11. Hose coupling according to one of Claims 1 to 10, characterized in that the insert (3) is constructed tapering conically towards its front end.

12. Hose coupling according to one of Claims 1 to 11, characterized in that the mouthpiece (2) comprises heat-treated steel.

Fig.1

Fig.2

Fig.3

Fig.4

Fig.5

EP 0 264 010 B1

_Fig. 7_

_Fig. 6_

_Fig. 8_

_Fig.10_

_Fig. 9_

_Fig.11_

_Fig.13_

_Fig.12_

_Fig.14_

_Fig.16_

_Fig.15_

_Fig.17_

Fig. 18

Fig. 19

Fig. 20

Fig. 21

Fig. 22